**Europäisches Patentamt**

(19) **European Patent Office**

**Office européen des brevets**

(11) Veröffentlichungsnummer: **0 012 901**
**B1**

## (12) EUROPÄISCHE PATENTSCHRIFT

(45) Veröffentlichungstag der Patentschrift:
**13.04.83**

(51) Int. Cl.³: **G 02 B 5/14**

(21) Anmeldenummer: **79105006.5**

(22) Anmeldetag: **07.12.79**

(54) **Verfahren zur Herstellung von Lichtwellenleiterkopplern.**

(30) Priorität: **29.12.78 DE 2856770**

(43) Veröffentlichungstag der Anmeldung:
**09.07.80 Patentblatt 80/14**

(45) Bekanntmachung des Hinweises auf die Patenterteilung:
**13.04.83 Patentblatt 83/15**

(84) Benannte Vertragsstaaten:
**FR GB**

(56) Entgegenhaltungen:
**DE-A-2 625 855**
**DE-A-2 731 376**
**DE-B-2 430 194**
**US-A-3 033 731**
**BELL SYSTEM TECHNICAL JOURNAL, Band 55, Nr. 8, Oktober 1976, New York A. H. CHERIN et al. »An Injection Molded Plastic Connector for Splicing Optical Cables«**

(73) Patentinhaber: **SIEMENS AKTIENGESELLSCHAFT, Berlin und München Wittelsbacherplatz 2, D-8000 München 2 (DE)**

(72) Erfinder: **Witte, Hans-Hermann, Dr., Hippelstrasse 15, D-8000 München 82 (DE)**

## Verfahren zur Herstellung von Lichtwellenleiterkopplern

Die vorliegende Erfindung bezieht sich auf ein Verfahren zur Herstellung von Lichtwellenleiterkopplern, insbesondere mit Glasfaserlichtwellenleitern.

In optischen Nachrichten-Übertragungssystemen spielen Bauelemente, wie Ein-Auskoppler, mit denen definierte Lichtanteile aus System-Lichtwellenleitern ein- und ausgekoppelt werden können, eine wichtige Rolle. Neben den physikalischen Eigenschaften der Strukturen ist im Hinblick auf die Produktion von Großserien die Einfachheit der Herstellungs-Technologie von entscheidender Wichtigkeit. Diese Forderung ist bei fast allen bis heute realisierten Abzweig-Kopplern nur unbefriedigend gelöst.

Aufgabe der vorliegenden Erfindung ist es, ein Verfahren der eingangs genannten Art anzugeben, welches sich vorteilhaft zur Herstellung von Lichtwellenleiterkopplern, wie Abzweig-Koppler oder Steckerverbindungen, in Serie eignet.

Die Aufgabe wird durch die im kennzeichnenden Teil des Patentanspruchs 1 angegebenen Maßnahmen gelöst.

Vorteilhafte Verfahrensdurchführungen sowie ein Verfahren zur Herstellung einer Parallel-Lichtleiterstruktur gehen aus den Unteransprüchen hervor.

Ein Verfahrensbeispiel wird anhand der Figuren in der folgenden Beschreibung näher erläutert, aus welcher sich auch die Vorteile des Verfahrens ergeben. Von den Figuren zeigt

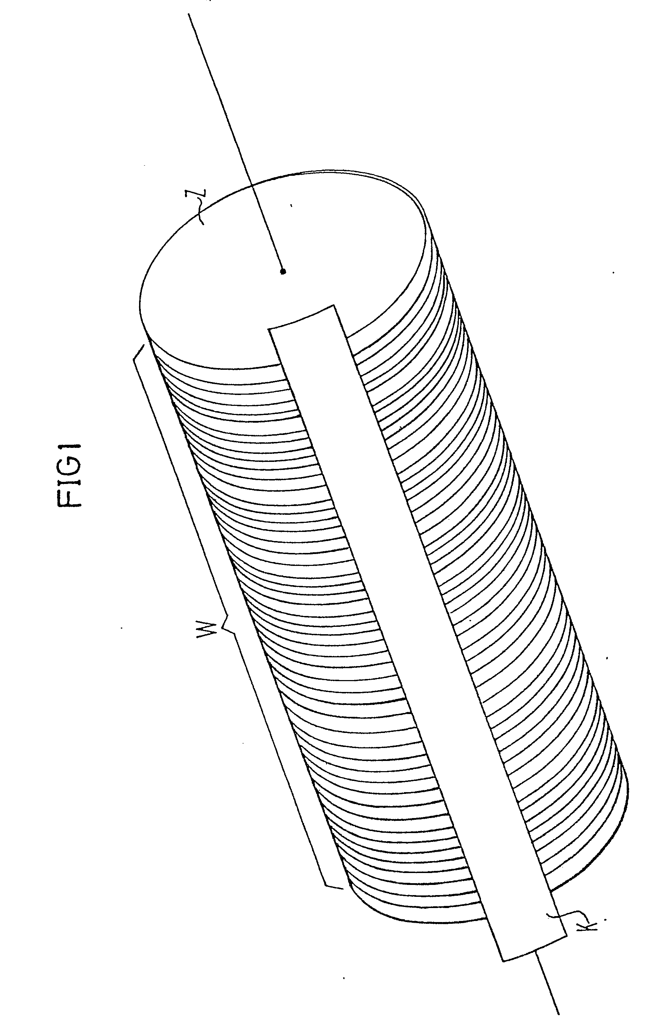

Fig. 1 in perspektivischer Darstellung eine Trommel, auf deren Mantel ein Glasfaserlichtwellenleiter in einer Lage zu einer Zylinderspule aufgewickelt ist, auf der ein quer zu den einzelnen Windungen der Spule verlaufender Klebestreifen haftet,

Fig. 2 in perspektivischer Darstellung eine aus der Zylinderspule gewonnene Parallel-Lichtleiterstruktur,

Fig. 3 in derselben Darstellungsart zwei Ausgangstrennteile, die durch vollständiges Durchtrennen der Parallel-Lichtleiterstruktur nach Fig. 2 quer zur Längsrichtung der Glasfasern entstanden sind,

Fig. 4 in der gleichen Darstellungsart, aber vergrößert, zwei Trennteile, die durch Abtrennen von den beiden Ausgangstrennteilen entstanden sind,

Fig. 5 in Draufsicht die Auflagefläche eines Führungskörpers, die zwei seitlich versetzte, parallele Führungsflächen aufweist, die senkrecht auf der Auflagefläche stehen, sowie die beiden Trennteile nach Fig. 4, die mit einander zugewandten Trennstirnflächen auf der Auflagefläche auf- und seitlich an den Führungsflächen anliegen, und

Fig. 6 in perspektivischer Darstellung ein Steckerteil einer Steckerverbindung.

Es sei darauf hingewiesen, daß die Zeichnungen nicht maßstabsgetreu sind.

Bei dem Verfahrensbeispiel wird eine frisch gezogene, dünnmantelige Kern-Mantelglasfaser in einer Lage auf den Umfang einer Ziehtrommel Z aufgewickelt, so daß sie eine Zylinderspule W bildet. Quer über die einzelnen Wicklungen wird ein Klebestreifen K gelegt, so daß die Fasern der einzelnen Wicklungen daran haften. Dann wird die Spule W in einem Abstand vom Klebestreifen aufgetrennt. Es sind so auf einfachste Weise eine Vielzahl von bereits parallel in einer Ebene nebeneinander angeordneten Lichtleitern gewonnen worden.

In einem typischen Beispiel wurde eine Glasfaser von 200 µm Durchmesser auf eine Trommel von 10 cm Durchmesser und 20 cm Länge aufgewickelt, was etwa 1000 parallel nebeneinanderliegenden Fasern entspricht, vorausgesetzt, daß sie einander berühren. Anstelle von einem Klebestreifen können auch zwei oder mehrere über den Umfang verteilte Klebestreifen auf die Zylinderspule geklebt werden. Es können dann durch zwei- oder mehrmaliges Durchtrennen der Glasfaser gleich mehrere solche Gebilde mit einer Vielzahl von parallel nebeneinanderliegenden Glasfasern hergestellt werden. Die Länge der parallel nebeneinanderliegenden Glasfasern bzw. deren Anzahl kann durch den Trommeldurchmesser bzw. der Spulen- oder Trommellänge in weiten Grenzen variiert werden.

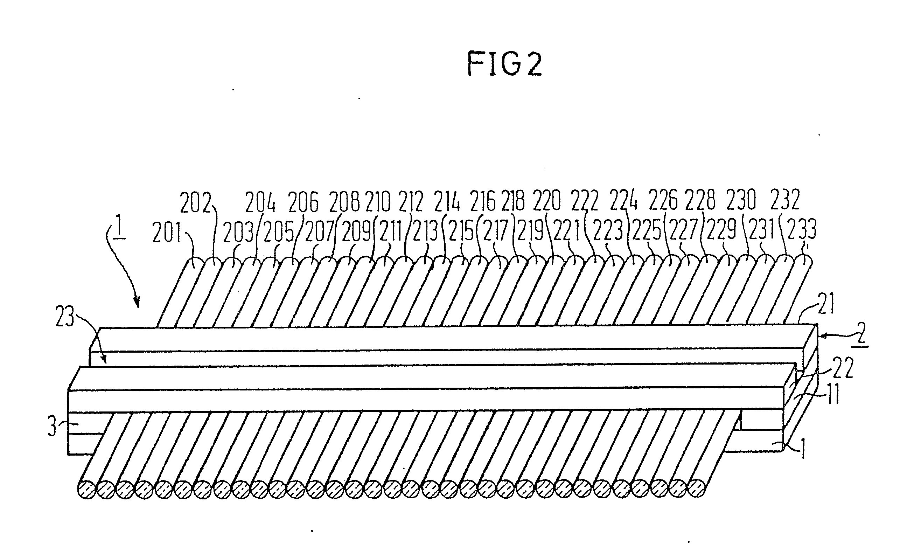

Die parallel nebeneinander auf einem Klebestreifen haftenden Glasfasern werden nun so auf eine Oberfläche eines ausreichend langen Glasstreifens 1 (Fig. 2) gelegt, daß sie quer zur Längsrichtung des Streifens verlaufen und an einem bei einer Stirnseite des Glasstreifens 1 auf der Oberfläche angebrachten Anschlag 11 anliegen. Für das oben angegebene spezielle Beispiel wurde ein Glasstreifen von 21 cm Länge, 5 mm Breite und 4 mm Höhe verwendet.

Die so aufgebrachten Fasern werden über dem Glasstreifen 1 durch zwei schmalere Glasstreifen 21 und 22 abgedeckt, die sich über sämtliche Fasern erstrecken. Die beiden schmaleren Glasstreifen 21 und 22 sind parallel und mit einem Abstand voneinander angeordnet, so daß zwischen ihnen eine spaltförmige Öffnung 23, die sich quer über sämtliche Fasern erstreckt, verbleibt. Bei dem speziellen Beispiel hatten die schmaleren Streifen eine Breite von 1,5 mm, während Länge und Höhe denen des Glasstreifens 1 entsprachen. Die Breite des Spaltes 23 betrug 2 mm.

Die durch die beiden schmaleren Streifen 21 und 22 gebildete Abdeckung 2 liegt bei der einen Stirnseite auf dem Anschlag 11 auf, während die andere Stirnseite auf einem Zwischenplättchen 3 aufliegt, das zwischen Glasstreifen 1 und Abdeckung 2 eingeschoben ist. Die Abdeckung 2 wird nun mit einigen Gramm Gewicht belastet und so gegen Verrückung gesichert, und die nebeneinanderliegenden Fasern, die mit 201 bis 233 bezeichnet sind, werden mit Hilfe des Zwischenplättchens 3 gegen den Anschlag 11 gedrückt, wodurch sichergestellt wird, daß sie einander berühren. Der Abstand der Abdeckung 2 von der Oberfläche des Glasstreifens 1 sollte dabei nicht größer als der doppelte Durchmesser einer Glasfaser sein. Bei dem speziellen Beispiel betrug die Dicke des Anschlags 11 sowie des Zwischenplättchens 3 300 µm, war also etwas größer als der Durchmesser einer Faser.

Zur Fixierung der Glasfasern 201 bis 233 wird in den Spalt 23 Klebstoff eingebracht, was zweckmäßigerweise vor dem Zusammendrücken der Fasern geschieht, damit der Klebstoff bis zur Oberfläche des Glasstreifens 1 vordringen kann. Nach dem Aushärten des Klebstoffes ist die in Fig. 2 dargestellte Parallel-Lichtleiterstruktur 1 entstanden, bei der der Glasstreifen 1, der den Trägerkörper bildet, die Glasfasern 201 bis 233, die miteinander in Berührung stehen, sowie die Abdeckung 2 fest miteinander verbunden sind.

Als Klebstoff eignet sich beispielsweise ein Zweikomponentenkleber der Fa. Ciba-Geigy, dessen Kleber mit V.P+W 396 und dessen Härter mit V.P+W 397 bezeichnet ist. Bei dem speziellen Beispiel wurde dieser Kleber mit einem Mischungsverhältnis von zehn Teilen Kleber und drei Teilen Härter verwendet.

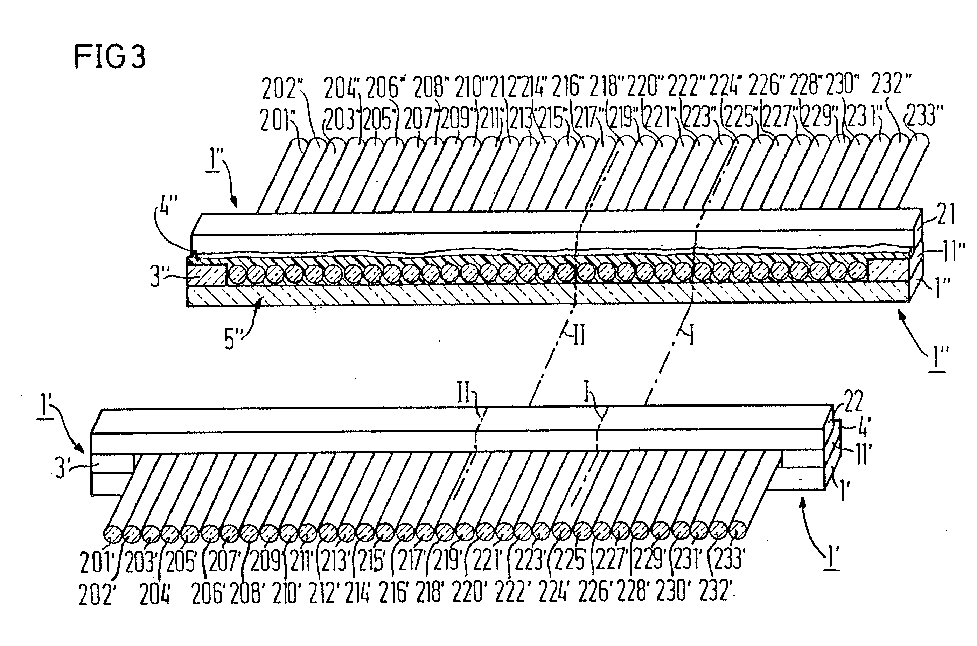

Die Parallel-Lichtleiterstruktur 1 wird nun durch einen im Spalt 23 entlang der schmaleren Glasstreifen 21 und 22 geführten Schnitt vollständig durchtrennt, so daß zwei Ausgangstrennhälften 1' und 1'' entstehen, wie sie in der Fig. 3 dargestellt sind. Durch den Schnitt sind der ausgehärtete Klebstoff, sämtliche Fasern 201 bis 233, das Zwischenplättchen 3, der Anschlag 11 und der Glasstreifen 1 durchtrennt worden. Jedes Ausgangstrennteil 1' bzw. 1'' besteht somit aus einem Glasstreifen 1' bzw. 1'', auf dem parallel nebeneinanderliegende und sich berührende Lichtwellenleiter 201' bis 233' bzw. 201'' bis 233'' mittels ausgehärtetem Kleber 4' bzw. 4'', ein Anschlag 11' bzw. 11'', ein Zwischenplättchen 3' bzw. 3'' und ein schmalerer Glasstreifen 22 bzw. 21 befestigt sind. Jedes der beiden Ausgangstrennteile 1', 1'' weist eine durch das Durchtrennen entstandene Trennfläche auf, von denen in der Fig. 3 nur die Trennfläche 5'' des Ausgangstrennteils 1'' zu sehen ist. Da diese Trennflächen auch die Stirnflächen an der durchtrennten Glasfaser enthalten, sind diese Trennflächen als Trennstirnflächen bezeichnet.

Die Trennstirnflächen beider Ausgangstrennteile 1' und 1'' werden nun bearbeitet und auf Politur gebracht. Je nach der Güte der Trennstirnfläche, die durch das Durchtrennen entstanden ist, besteht die Bearbeitung in einem Schleifvorgang mit nachfolgendem Poliervorgang oder einem Poliervorgang allein. Das Durchtrennen erfolgt zweckmäßigerweise durch Schneiden, Sägen oder durch Fräsen. Bei dem speziellen Beispiel wurde durchsägt, geschliffen und poliert.

Bei der Herstellung von Abzweig-Kopplern mit identischem Koppelverhältnis wird so vorgegangen, daß die beiden Ausgangstrennteile 1' und 1'' mit polierten Trennstirnflächen fest miteinander so verbunden werden, daß die Trennstirnflächen einander zugewandt und parallel sind, und die Glasfasern 201' bis 233' und 201'' bis 233'' seitlich, d. h. in Längsrichtung der Glasstreifen 1' bzw. 1'', definiert versetzt sind. Von dem so hergestellten Ausgangskoppler, bei dem alle Fasern in gleicher Weise gegeneinander versetzt sind, werden nun kleinere Abzweig-Koppler mit gewünschter Anzahl von Glasfasern abgetrennt. Es können, wie es auch beim speziellen Beispiel der Fall war, Abzweig-Koppler von weniger als 2 mm Breite abgetrennt werden.

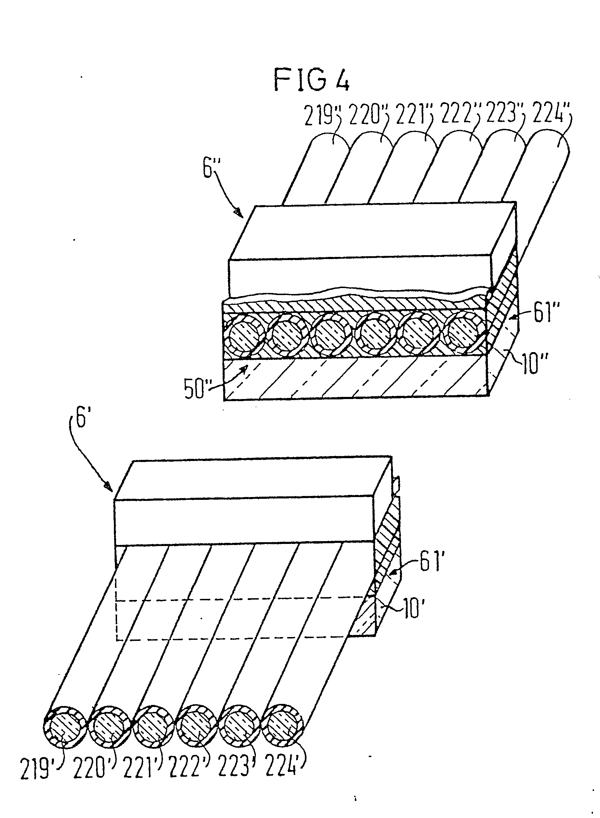

Bei der Herstellung einer Vielzahl von Abzweig-Kopplern mit unterschiedlichen Abzweigverhältnissen wird so vorgegangen, daß von den Ausgangstrennteilen 1' und 1'' mit polierten Trennstirnflächen kleinere Trennteile abgetrennt werden, die als Abtrennteile bezeichnet werden. Bezüglich Fig. 3 sei beispielsweise angenommen, daß bis zur strichpunktierten Linie I, die im wesentlichen parallel zu den Lichtleitern verläuft, was aber nicht notwendig ist, bereits Abtrennteile abgetrennt worden sind. Durch eine Durchtrennung entlang der strichpunktierten Linie II, die hier parallel zur Linie I verläuft, werden nun weitere zwei Abtrennteile erzeugt, die in Fig. 4 vergrößert dargestellt und mit 6' bzw. 6'' bezeichnet sind. Das Abtrennen von Abtrennteilen kann im Prinzip bei jedem Ausgangstrennteil unabhängig vom anderen vorgenommen werden. Es empfiehlt sich aber, Abtrennteile so herzustellen, wie es in der Fig. 3 angedeutet ist. Die Lichtwellenleiter solcher Abtrennteile sind durch Durchtrennen derselben Lichtleiter entstanden. Zwei Abtrennteile, vorzugsweise zwei Abtrennteile 6' und 6'', werden so fest miteinander verbunden, daß ihre Trennstirnflächen einander zugewandt und parallel und die Lichtleiter seitlich gegeneinander versetzt sind. Für jeden so herzustellenden Koppler kann der Versatz individuell und somit auch das Koppelverhältnis eingestellt werden.

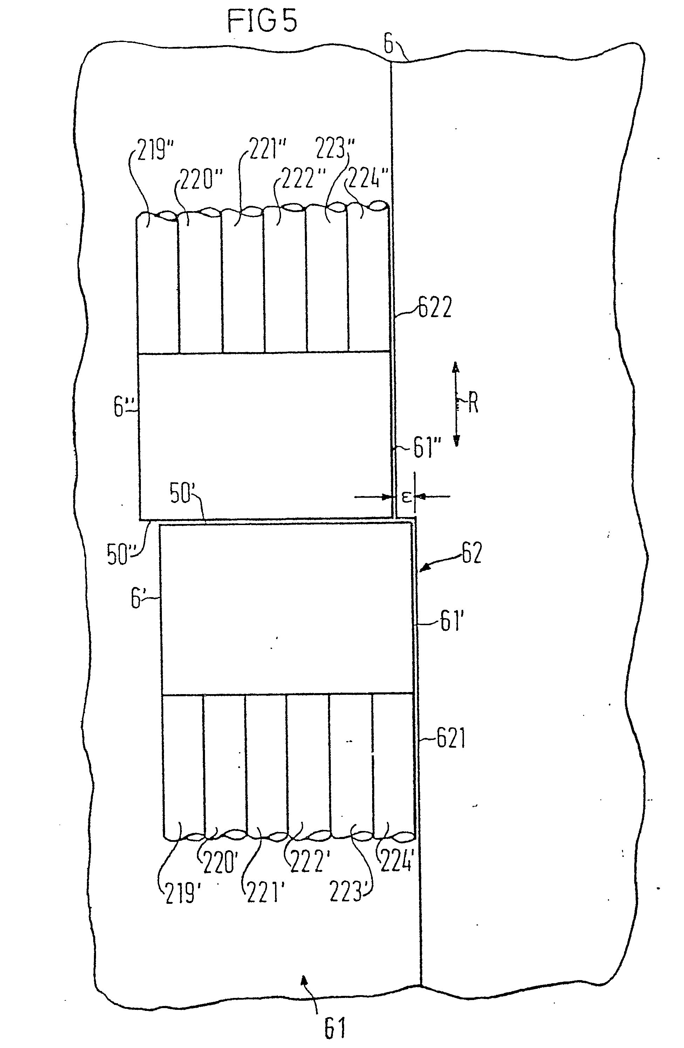

Zwei zu verbindende Trennteile, d. h. Ausgangstrennteile sowie Abtrennteile, werden zweckmäßigerweise mit Hilfe eines Führungskörpers miteinander verbunden. Als Beispiel sei angenommen, daß die beiden Abtrennteile 6' und 6'' miteinander verbunden werden sollen. Dazu werden die beiden Abtrennteile 6' und 6'' auf eine ebene Auflagefläche 61 des Führungskörpers 6 gelegt (Fig. 5). Die Auflagefläche 61 ist durch eine in einer Richtung R geradlinig verlaufende Führungskante 62 begrenzt. Die beiden Abtrennteile 6' und 6'' werden so auf die Auflagefläche 61 gelegt, daß die aus den Glasstreifen 1' bzw. 1'' entstandenen Streifenanteile 10' bzw. 10'' auf der Auflagefläche aufliegen. Dadurch wird gewährleistet, daß die Fasern 219' bis 224' bzw. 219'' bis 224'' beider Abtrennteile den gleichen Abstand von der ebenen Auflagefläche 61 haben.

Die Führungskante 62 setzt sich aus zwei in der Richtung R geradlinig verlaufenden Führungsteilkanten 621 und 622 zusammen, die senkrecht zu dieser Richtung einen Abstand ε voneinander haben und durch eine Stufe lückenlos ineinander übergehen.

Die beiden Abtrennteile 6′ und 6″ werden auf der Auflagefläche 61 so angeordnet, daß ihre Trennstirnflächen 50′ und 50″ einander gegenüberliegen und mit ihren Seitenflächen 61′ bzw. 61″ an den Führungsteilkanten 621 bzw. 622 anliegen.

Beide Abtrennteile 6′ und 6″ werden nun gegen die Führungskante 62 gedrückt und durch Verschieben in der Richtung R zusammengebracht, so daß die polierten Trennstirnflächen 50′ und 50″ einander berühren oder, was sich empfiehlt, einander bis auf eine dünne dazwischenliegende Klebstoffschicht, die vorher aufgebracht wurde, nahekommen. Als Klebstoff hierfür eignet sich beispielsweise Sylgat 182® der Fa. Corning.

Dieser Endzustand ist in der Fig. 5 dargestellt. Die Lichtwellenleiter 219′ bis 224′ des Abtrennteils 6′ sind gegenüber den Lichtwellenleitern 219″ bis 224″ des Abtrennteils 6″ um den Abstand ε gegeneinander seitlich versetzt.

Die an den Führungsteilkanten 621 bzw. 622 anliegenden Seitenflächen 61′ bzw. 61″ müssen zur Erzielung eines hinreichend genau definierten Versatzes ausreichend glatt und eben sein sowie im gleichen Winkel zu den Lichtwellenleitern verlaufen. Es reicht hin, wenn diese Seitenflächen geschliffen oder poliert sind.

Ein seitlicher Versatz kann auch erzeugt werden, wenn eine oder mehrere nachgiebige Führungskanten verwendet werden und unterschiedliche Drücke auf die zu verbindenden Trennteile, wie die Abtrennteile 6 und 6′, senkrecht zu den Führungskanten ausgeübt werden. Nachgiebige Führungskanten können aus elastischem Material gefertigt werden, es kann sich aber auch um bewegliche, über Federn vorgespannte Führungskanten handeln.

Eine weitere Möglichkeit besteht darin, daß auf eine Seitenfläche zumindest eines Trennteils eine Schicht aus elastischem Material aufgebracht wird, beispielsweise eine Mylar®-Folie, die an die Führungskante angelegt wird. Auch hier läßt sich ein Versatz durch Ausübung eines Druckes oder unterschiedlicher Drücke einstellen.

Bei elastischen Materialien läßt sich je nach Elastizität des Materials durch Druck ein Versatz oder zusätzlicher Versatz bis zu 20 μm erzeugen.

Zum Verbinden zweier zusammengebrachter Trennteile, wie es in der Fig. 5 dargestellt ist, wird vorteilhafterweise ein Plättchen aufgeklebt, wodurch die beiden Trennteile schon fixiert sind.

Bei der Herstellung von Steckerverbindungen wird so vorgegangen, daß vor dem Bearbeiten der Trennstirnflächen zur Bildung von Profilstäbchenelementen zwei oder mehrere Trennteile jeweils in einem U-Profilstäbchen befestigt werden, so daß die Lichtleiter parallel zur Längsachse des Stäbchens verlaufen.

Zunächst wird dann ein solches Profilstäbchenelement in einem weiteren U-Profilstäbchen parallel dazu befestigt. Dieses weitere Profilstäbchen und ein zusätzliches solches weitere U-Profilstäbchen werden seitlich an eine geradlinig verlaufende Führungskante auf einer Auflagefläche eines Führungskörpers so angelegt, daß die Trennstirnfläche des auf dem weiteren Profilstäbchen befestigten Trennteils dem zusätzlichen weiteren Profilstäbchen zugewandt ist. Auf dieses zusätzliche weitere Profilstäbchen wird oder ist ein Profilstäbchenelement mit einem Trennteil so aufgelegt worden, daß die Trennstirnfläche seines Trennteils der anderen Trennstirnfläche gegenüberliegt und Seitenflächen des weiteren und zusätzlichen weiteren Profilstäbchens an der Führungsfläche anliegen.

Nun wird das aufgelegte Profilstäbchenelement auf das befestigte Profilstäbchenelement so einjustiert, daß Lichtleiter beider Elemente fluchten. Dann wird das einjustierte Profilstäbchenelement auf dem zusätzlichen weiteren Profilstäbchen fixiert und erst danach die Trennstirnflächen der auf jeweils zwei Profilstäbchen fixierten Trennteile samt den Profilstäbchen auf Politur gebracht, wodurch Steckerteile entstanden sind.

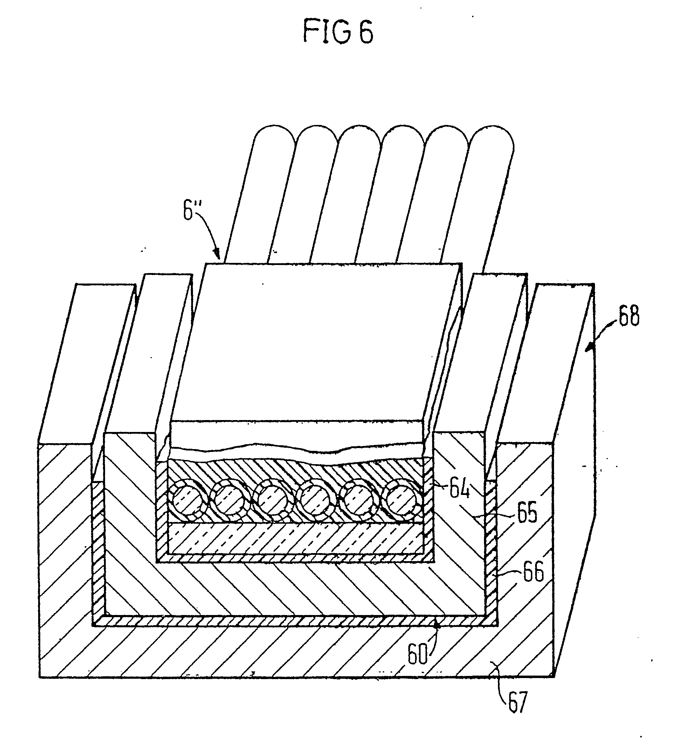

Ein solches fertiges Steckerteil ist in der Fig. 6 dargestellt. Dieses Steckerteil besteht aus dem Abtrennteil 6″ von Fig. 4, welches mittels Klebstoff 64 im U-Profilstäbchen 65 befestigt ist und zusammen mit diesem das Profilstäbchenelement 60 bildet. Dieses Profilstäbchenelement 60 ist wiederum in dem weiteren U-Profilstäbchen 67 mittels Klebstoff 66 befestigt. Die glatte Seitenfläche am weiteren Profilstäbchen, die zum Anlegen an eine Führungsfläche dient, ist mit 68 bezeichnet. Als Klebstoff eignet sich derselbe Klebstoff, wie er zur Befestigung der Lichtleiter auf dem Glasstreifen 1 in Fig. 2 verwendet wird. Für die Profilstäbchen werden vorzugsweise Metallstäbchen verwendet.

Bei der Serienfertigung von Steckerteilen wird so vorgegangen, daß jedes herzustellende Steckerteil gegenüber einem Prototyp, als welcher beispielsweise das fertige Steckerteil nach Fig. 6 dienen kann, einjustiert wird.

Zur Herstellung der Steckerverbindung werden die zusammengefügten Steckerteile auf die Auflagefläche des Führungskörpers gelegt und mittels Schrauben auf diese und an die Führungsfläche gedrückt und so fixiert. Der axiale Abstand kann dabei bis auf wenige μm leicht eingehalten werden. Eine gemeinsame Kappe kann vor Verschmutzung und mechanischer Beschädigung schützen. Da derzeit Glasplättchen durch Fräsen mit einer Dickenschwankung von weniger als 3 μm ohne weiteres hergestellt werden können, sind die dadurch bedingten Steckerverluste beim Verbinden beliebiger Steckerteile geringer als 0,5 dB. Die Justierung der Steckerteile ist ebenso wie bei den Abzweig-Kopplern sehr einfach, wenn die Steckerausgangsleistung gemessen wird, worauf noch eingegangen wird. Beim Verbinden der beiden Steckerhälften tritt kein Materialabrieb auf, so daß sich von daher die Steckerverluste im Laufe der Zeit nicht vergrößern.

Durch das Justieren von herzustellenden Steckerteilen auf einen Prototyp wird gewährleistet, daß die Steckerteile gegeneinander austauschbar sind.

Zweckmäßigerweise wird das Koppelverhältnis für die Abzweig-Koppler als auch für die Steckerverbindungen in einem Meßplatz überwacht. Dabei wird ein Lichtleiter von einer der beiden zusammengebrachten Trennteile bzw. Steckerteile mit einer Lichtwelle angeregt, die dem stationären Modenspektrum der Lichtleiter möglichst nahekommt. Die Ausgangsleistung von einem oder das Ausgangsleistungsverhältnis aus zwei von diesen Lichtwellenleitern wegführenden Lichtleitern des anderen Trennteils wird laufend gemessen. Die Ausgangsleistung oder das Ausgangsleistungsverhältnis wird ständig, beispielsweise mit einem Rechner, überwacht, während die Trennteile des einzelnen Abzweig-Kopplers bzw. die Steckerhälften der einzelnen Steckerverbindung z. B. über einen Schrittmotor verschoben werden. Wenn die vorgegebene Ausgangsleistung bzw. das vorgegebene Leistungsverhältnis erreicht ist, wird der weitere Vortrieb gestoppt und die beiden Trennteile bzw. die Steckerteile fixiert.

Es sei abschließend noch darauf hingewiesen, daß sich mit einem vorstehend beschriebenen Verfahren nicht nur Abzweig-Koppler von weniger als 2 mm Breite, sondern auch entsprechend schmale Abzweig-Koppler mit variablem Koppelverhältnis und auch schmale Steckerteile herstellen lassen, weil sich auch Abtrennteile von weniger als 2 mm Breite abtrennen lassen.

## Patentansprüche

1. Verfahren zur Herstellung von Lichtwellenleiterkopplern, insbesondere mit Glasfaserlichtwellenleitern, dadurch gekennzeichnet, daß von einer Parallel-Lichtwellenleiterstruktur (1) ausgegangen wird, die einen schichtförmigen Trägerkörper (1) und eine Vielzahl von Lichtwellenleitern (201 bis 233) umfaßt, die parallel nebeneinander und sich berührend auf einer ebenen Oberfläche des Trägerkörpers befestigt sind, daß aus dieser Parallel-Lichtwellenleiterstruktur (1) Trennteile (1', 1'', 6', 6'') hergestellt werden, von denen jedes eine Trennstirnfläche (5'', 50', 50'') aufweist, die durch eine Durchtrennung der Parallel-Lichtwellenleiterstruktur senkrecht zur Längsrichtung der Lichtwellenleiter entstanden ist und die in einem Bearbeitungsschritt auf Politur gebracht wird, und daß zwei Trennteile (1', 1'' bzw. 6', 6'') so miteinander verbunden werden, daß die polierten Trennstirnflächen einander zugewandt und parallel sind und die Lichtwellenleiter beider Trennteile im wesentlichen in einer Richtung verlaufen.

2. Verfahren nach Anspruch 1, dadurch gekennzeichnet, daß durch vollständige Durchtrennung der Parallel-Lichtwellenleiterstruktur (1) senkrecht zur Längsrichtung der Lichtwellenleiter (201 bis 233) zwei Ausgangstrennteile (1', 1'') hergestellt werden und daß die Trennstirnfläche eines jeden Ausgangstrennteils auf Politur gebracht wird.

3. Verfahren nach Anspruch 2 zur Herstellung von Abzweig-Kopplern mit übereinstimmendem Koppelverhältnis, dadurch gekennzeichnet, daß die beiden Ausgangstrennteile (1', 1'') mit einander zugewandten polierten Trennflächen in der Ebene der Lichtwellenleiter gegeneinander versetzt fest miteinander verbunden werden und daß von der so entstandenen Anordnung Teile vorgewählter Breite abgetrennt werden, welche einzelne Abzweig-Koppler bilden.

4. Verfahren nach Anspruch 2 zur Herstellung von Abzweig-Kopplern mit voneinander verschiedenen Koppelverhältnissen, dadurch gekennzeichnet, daß von den beiden Ausgangstrennteilen (1', 1'') Abtrennteile bestimmter Breite abgetrennt werden und daß je zwei solcher Abtrennteile (6, 6'') in der Ebene der Lichtwellenleiter gegeneinander versetzt fest miteinander verbunden werden.

5. Verfahren nach einem der vorhergehenden Ansprüche, dadurch gekennzeichnet, daß zum Verbinden zweier Trennteile (1', 1'', 6', 6'') diese auf eine Auflagefläche (61) eines Führungskörpers (6) so aufgelegt werden, daß ihre Trennstirnflächen einander gegenüberliegen und Seitenflächen der Trennteile an einer geraden Führungskante (62) anliegen, welche die Auflagefläche (61) begrenzt, und daß durch Verschieben in Richtung der Führungskante die beiden Trennteile zusammengebracht werden.

6. Verfahren nach Anspruch 5, dadurch gekennzeichnet, daß auf zumindest eines zweier zusammengebrachter Trennteile, welches an einer nachgiebigen Führungskante und/oder mit einer nachgiebigen Seitenfläche an der Führungskante anliegt, seitlich ein zur Führungskante hin gerichteter Anpreßdruck ausgeübt wird und daß die beiden Trennteile mit dem dadurch erzeugten seitlichen Versatz miteinander verbunden werden.

7. Verfahren nach Anspruch 5, dadurch gekennzeichnet, daß zwei in der gleichen Richtung (R) verlaufende Führungskanten (621, 622) vorgesehen sind, die um ein Stück ε senkrecht zur genannten Richtung gegeneinander versetzt sind, daß ein Trennteil (6') an die eine Führungskante (621) und das andere Trennteil (6'') an die andere Führungskante (622) angelegt wird und daß die dadurch um das Stück ε gegeneinander versetzten Trennteile miteinander verbunden werden.

8. Verfahren nach Anspruch 7, dadurch gekennzeichnet, daß die beiden Führungskanten (621, 622) quer zur genannten Richtung relativ zueinander verschiebbar sind.

9. Verfahren nach einem der vorhergehenden Ansprüche, dadurch gekennzeichnet, daß auf zusammengebrachte Trennteile ein Plättchen aufgeklebt wird, wodurch deren Verbindung hergestellt ist.

10. Verfahren nach Anspruch 1 zur Herstellung von Steckerverbindungen für mehrere Fasern, dadurch gekennzeichnet, daß ein Trennteil, bevor seine Trennstirnfläche auf Politur gebracht wird, zur Bildung eines Profilstäbchenelementes (60) auf einem Profilstäbchen (65) so befestigt wird, daß die Lichtleiter parallel zur Längsrichtung der Mantelfläche des Stäbchens verlaufen, daß dieses Profilstäbchenelement (60) auf einem weiteren Profilstäbchen (67) parallel zur Längsrichtung dessen Mantelfläche befestigt wird, daß dieses weitere Profilstäbchen und ein zusätzliches weiteres Profilstäbchen seitlich an eine geradlinig verlaufende Führungskante auf einer Auflagefläche eines Führungskörpers so angelegt werden, daß die Trennstirnfläche des auf dem weiteren Profilstäbchen befestigten Trennteils dem zusätzlichen weiteren Profilstäbchen zugewandt ist, auf das ein Profilstäbchenelement so aufgelegt worden ist, daß die Trennstirnfläche seines Trennteils der anderen Trennstirnfläche gegenüberliegt, daß das aufgelegte Profilstäbchenelement auf das befestigte Profilstäbchenelement so einjustiert wird, daß die Lichtwellenleiter beider Elemente im wesentlichen fluchten, daß das einjustierte Profilstäbchenelement auf dem zusätzlichen weiteren Profilstäbchen fixiert wird und daß danach die noch unpolierte Trennstirnfläche der auf zwei Profilstäbchen fixierten Trennteile samt den Profilstäbchen auf Politur gebracht wird, wodurch ein Steckerteil entstanden ist.

11. Verfahren nach Anspruch 10, dadurch gekennzeichnet, daß als Profilstäbchen U-Profilstäbchen (65, 67) verwendet werden, von denen eines (65) in das andere (67) paßt, wobei das Trennteil in die Ausnehmung des kleineren U-Profilstäbchens (65) eingefügt wird.

12. Verfahren nach Anspruch 10 oder 11, dadurch gekennzeichnet, daß für jedes herzustellende Steckerteil die Justierung gegenüber einem Prototyp durchgeführt wird.

13. Verfahren nach einem der Ansprüche 10 bis 12, dadurch gekennzeichnet, daß zwei Steckerteile nach dem Zusammenbringen auf dem Führungskörper durch Andrücken an die Auflagefläche und die Führungskante mittels Schrauben fixiert werden.

14. Verfahren nach einem der vorhergehenden Ansprüche, dadurch gekennzeichnet, daß das Einstellen eines definierten Koppelverhältnisses überwacht wird, indem ein Lichtwellenleiter eines der beiden zusammengebrachten Trennteile mit einer Lichtwelle angeregt wird und die Ausgangsleistung von einem oder das Ausgangsleistungsverhältnis von zwei von ihm wegführenden Lichtwellenleitern des anderen Trennteils laufend gemessen wird.

15. Verfahren nach Anspruch 14, dadurch gekennzeichnet, daß eine Lichtquelle verwendet wird, die dem stationären Modenspektrum der Lichtwellenleiter möglichst nahekommt.

16. Verfahren nach einem der vorhergehenden Ansprüche, dadurch gekennzeichnet, daß das Einstellen zweier Trennteile quer zur Längsrichtung der Fasern elektro-mechanisch gesteuert wird.

17. Verfahren nach Anspruch 15 oder 16, dadurch gekennzeichnet, daß die Ausgangsleistung oder das Ausgangsleistungsverhältnis ständig mit einem Rechner überwacht wird, während die Trennteile relativ zueinander verschoben werden, und daß die Verschiebung bei Erreichen eines bestimmten Leistungsverhältnisses eingestellt und die beiden Trennteile in dieser Lage fixiert werden.

18. Verfahren nach Anspruch 1, dadurch gekennzeichnet, daß zur Herstellung der Parallel-Lichtwellenleiterstruktur ein Lichtwellenleiter auf dem Umfang einer Trommel (Z) so aufgewickelt wird, daß er eine einlagige Zylinderspule (W) bildet, daß diese Spule durch einen Schnitt senkrecht zum Windungsverlauf aufgetrennt und unter Beibehaltung der Parallel-Anordnung der Lichtwellenleiter von der Trommel abgenommen, auf die Oberfläche des schichtförmigen Trägerkörpers (1) aufgelegt und so befestigt wird, daß die Lichtwellenleiter parallel nebeneinanderliegen und einander berühren.

19. Verfahren nach Anspruch 18, dadurch gekennzeichnet, daß die Windungslage mittels eines Klebestreifens (K) abgenommen wird, welcher so quer über die nebeneinanderliegenden Lichtwellenleiter der Lage gelegt wird, daß sie daran haften.

20. Verfahren nach Anspruch 18 oder 19, dadurch gekennzeichnet, daß zum Befestigen der Lichtwellenleiter auf dem Trägerkörper diese mit einer Abdeckung (2) abgedeckt werden, welche auf den Lichtwellenleitern fixiert wird, und daß dann durch Einführen von Klebstoff durch zumindest eine in der Abdeckung vorgesehene Öffnung (23) die Lichtwellenleiter fixiert werden.

21. Verfahren nach einem der Ansprüche 18 bis 20, dadurch gekennzeichnet, daß die Lichtwellenleiter mit Hilfe eines auf dem Trägerkörper vorgesehenen Anschlags (11) und eines verschiebbaren Zwischenplättchens (3) von der Seite zusammengedrückt werden, bis sie einander berühren.

**Claims**

1. A process for the production of light waveguide couplers, particularly with glass fibre light waveguides, characterised in that, the process proceeds from a parallel light waveguide structure (1) which comprises a layer-shaped carrier body (1) and a plurality of light waveguides (201 to 233) which are fixed parallel to one another and in cotact with one another on a flat surface of the carrier body; that from this parallel light waveguide structure (1), severed parts (1', 1'', 6', 6'') are produced, each of which possesses a severed end surface (5'', 50', 50'') formed by the division of the parallel light waveguide structure at right angles to the longitudinal direction of the light waveguides, and which is polished in a processing step; and that two severed parts (1', 1" and 6', 6") are connected to one another in such a manner that the polished severed end surfaces face and are parallel to one another and the light waveguides of the two severed parts run essentially in one direction.

2. A process according to Claim 1, characterised in that, as a result of the complete division of the parallel light waveguide structure (1) at right angles to the longitudinal direction of the light waveguides (201 to 233), two initial severed parts (1', 1") are produced and that the severed end surface of each initial severed part is polished.

3. A process according to Claim 2, for the production of branch couplers having a corresponding coupling ratio, characterised in that the two initial severed parts (1', 1") are permanently connected to one another with their polished severed surfaces facing one another but offset with respect to one another in the plane of the light waveguide; and that from the arrangement thus formed, parts of preselected widths are divided off and serve to form individual branch couplers.

4. A process according to Claim 2 for the production of branch couplers having coupling ratios which differ from one another, characterised in that separated parts of specific widths are separated from the two initial severed parts (1', 1"), and that two such separated parts (6, 6") are permanently connected to one another so as to be offset with respect to one another in the plane of the light waveguides.

5. A process according to one of the preceding Claims, characterised in that, for the connection of two severed parts (1', 1", 6', 6"), the parts are so placed on a support surface (61) of a guide body (6), that their severed end surfaces are arranged opposite one another and side faces of the severed parts adjoin a straight guide edge (62) which bounds the support surface (61); and that the two severed parts are brought together by displacing them in the direction of the guide edge.

6. A process according to Claim 5, characterised in that, at least one of two severed components which have been brought together, and which adjoins a yieldable guide edge and/or a yieldable side surface on the guide edge, is subjected laterally to a pressure which is directed towards the guide edge; and that the two severed parts are connected to one another with the lateral offset so produced.

7. A process according to Claim 5, characterised in that, two guide edges (621, 622) are provided which run in the same direction (R) and which are offset at right angles to said direction relative to one another by an amount ε; that one severed part (6') is applied to the first guide edge (621), whilst the other severed part (6") is applied to the other guide edge (622); and that the severed parts which have thus been mutually offset by the amount ε, are connected to one another.

8. A process according to Claim 7, characterised in that the two guide edges (621, 622) can be displaced relative to one another transversely to said direction.

9. A process according to one of the preceding Claims, characterised in that a platelet is glued to assembled severed parts in order to effect their connection.

10. A process according to Claim 1, for the production of plug connections for a plurality of fibres, characterised in that, before its severed end surface is polished, in order to form a small profiled rod element (60), a severed component is ifxed to a small profiled rod (65) in such manner that the light conductors run parallel to the longitudinal direction of the outer surface of the rod; that the profiled rod element (60) is secured to a further small profiled rod (67) parallel to the longitudinal direction of the surface thereof; that this further small profiled rod and an additional further small profiled rod are applied to a support surface of a guide body, laterally to a rectilinear guide edge, in such a way that the severed end surface of the severed member which has been attached to the further small profiled rod faces towards the additional small further profiled rod to which a profiled small rod element has been applied in such a way that the severed end surface of its severed part faces the other severed end surface; that the applied profiled small rod element is adjusted on the fixed profiled rod element in such a way that the light waveguides of the two elements are fundamentally in alignment; that the adjusted profiled rod element is fixed onto the additional further profiled rod; and that, subsequently, the still unpolished severed end surfaces of the severed parts which have been fixed to the two small profiled rods, together with the small profiled rods, are polished, whereby a plug component is produced.

11. A process according to Claim 10, characterised in that the profiled rods are U-profiled rods (65, 67) one (65) of which fits into the other (67), the severed part being inserted into the recess in the smaller U-profiled rod (65).

12. A process according to Claim 10 or Claim 11, characterised in that, for each plug component which is to be produced, the adjustment is carried out opposite a prototype.

13. A process according to one of Claims 10 to 12, characterised in that, after assembly, two plug components are fixed on the guide body by pressure against the support surface and the guide edge by means of screws.

14. A process according to one of the preceding Claims, characterised in that the setting of a predetermined coupling ratio is monitored by energising a light waveguide of one of the two assembled severed parts by a light wave and continuously measuring the output power from one waveguide, or the output power ratio of two light waveguides of the other severed part, leading away from said waveguide of the one severed part.

15. A process according to Claim 14, characterised in that a light source is used which approaches as closely as possible the stationary mode spectrum of the light waveguide.

16. A process according to one of the preceding Claims, characterised in that the setting up of two severed parts transversely to the longitudinal direction of the fibres is controlled electro-mechanically.

17. A process according to Claim 15 or 16, characterised in that the output power or the output power ratio is continuously monitored by a computer, whilst the severed parts are displaced relative to one another; and that, when a specific power ratio has been reached, the displacement is discontinued and the two severed parts are fixed in this position.

18. A process according to Claim 1, characterised in that, for the production of parallel light waveguide structures, a light waveguide is wound on to the periphery of a drum (Z) in such a way that it forms a single-layer cylindrical coil (W); that this coil is severed by a cut at right angles to the direction of the turns and, whilst maintaining the parallel arrangement of the light waveguides, is removed from the drum, applied to the surface of the layer-shaped carrier body (1), and fixed in such a way that the light waveguides are arranged beside one another in parallel, and contact one another.

19. A process according to Claim 18, characterised in that the winding layer is removed by means of an adhesive strip (K) which is so positioned transversely over the adjacently arranged light waveguides of the layer, that they adhere thereto.

20. A process according to Claim 18 or Claim 19, characterised in that, to fasten the light waveguides to the carrier body, the waveguides are covered with a covering (2) which is fixed on the light waveguides and that the light waveguides are then fixed by the introduction of adhesive through at least one opening (23) provided in the covering.

21. A process according to one of Claims 18 to 20, characterised in that, with the aid of a stop means (11) provided on the carrier body and a displaceable intermediate platelet (3), the light waveguides are compressed from the side until they touch one another.

## Revendications

1. Procédé de fabrication de coupleurs de guides d'ondes de lumière, en particulier avec des guides d'ondes de lumière formés de fibres de verre, caractérisé en ce qu'on part d'une structure (1) de guides d'ondes de lumière parallèles, qui comporte un corps de support en forme de couche (1) et un grand nombre de guides d'ondes de lumière (201 à 233) qui sont fixés parallèlement, côte à côte, et en contact réciproque, sur une surface plane du corps de support, qu'on réalise à partir de cette structure (1) de guides d'ondes de lumière parallèles, des éléments séparés (1', 1'', 6', 6'') dont chacun possède une surface frontale de séparation (5'', 50', 50''), qui est obtenue par un sectionnement de la structure de guides d'ondes de lumière parallèles, perpendiculairement à la direction longitudinale des guides d'ondes de lumière et à laquelle on donne un poli brillant au cours d'une phase de traitement, et qu'on relie entre eux deux éléments séparés (1', 1'' ou 6', 6'') de manière que les surfaces frontales de séparation polies sont tournées l'une vers l'autre et parallèles entre elles et que les guides d'ondes de lumière des deux éléments séparés s'étendent essentiellement suivant une direction.

2. Procédé selon la revendication 1, caractérisé en ce qu'on réalise deux éléments séparés de départ (1', 1'') par sectionnement complet de la structure (1) de guides d'ondes de lumière parallèles, perpendiculairement à la direction longitudinale des guides d'ondes de lumière (201 à 233), et qu'on donne un poli brillant à la surface frontale de séparation de chaque élément séparé de départ.

3. Procédé selon la revendication 2 pour fabriquer des coupleurs de dérivation ayant des taux de couplage coïncidants, caractérisé en ce qu'on relie rigidement entre eux, en les décalant réciproquement dans le plan des ondes de lumière, les deux éléments séparés de départ (1', 1'') comportant des surfaces de séparation polies tournées l'une vers l'autre, et qu'on réalise par subdivision, à partir du dispositif ainsi obtenu, des éléments possédant une largeur choisie à l'avance et qui forment des coupleurs individuels de dérivation.

4. Procédé selon la revendication 2, pour réaliser des coupleurs de dérivation comportant des taux de couplage différents, caractérisé en ce qu'on détache des deux éléments séparés de départ (1', 1''), des éléments découpés possédant une valeur déterminée et qu'on relie rigidement entre eux, en les décalant réciproquement dans le plan des guides d'ondes de lumière, deux tels éléments découpés (6', 6'').

5. Procédé selon l'une des revendications précédentes, caractérisé en ce que pour relier deux éléments séparés (1', 1'', 6' et 6''), on dispose ces éléments sur une surface de support (61) d'un corps de guidage (6) de manière que leurs surfaces frontales de séparation soient réciproquement en vis-à-vis et que des surfaces latérales des éléments séparés soient appliquées contre une arête de guidage rectiligne (62), qui limite la surface de support (61), et qu'on réunit les deux éléments séparés, par déplacement en direction de l'arête de guidage.

6. Procédé selon la revendication 5, caractérisé en ce qu'on exerce latéralement une pression de serrage dirigée vers l'arête de guidage sur au moins l'un des deux éléments séparés réunis, qui est appliquée contre une arête de guidage flexible et/ou, par une surface latérale flexible, contre l'arête de guidage, et qu'on relie entre eux les deux éléments séparés avec le décalage latéral produit de ce fait.

7. Procédé selon la revendication 5, caractérisé en ce qu'il est prévu deux arêtes de guidage (621, 622) dirigées suivant la même direction (R), qui sont décalées l'une par rapport à l'autre d'une distance ε, perpendiculairement à la direction indiquée, qu'on place un élément séparé (6') contre une arête de guidage (621) et l'autre élément séparé (6'') contre l'autre arête de guidage (622), et qu'on relie entre eux les éléments séparés et décalés de ce fait réciproquement de la distance ε.

8. Procédé selon la revendication 7, caractérisé en ce que les deux arêtes de guidage (621, 622) sont déplaçables l'une par rapport à l'autre transversalement par rapport à la direction indiquée.

9. Procédé selon l'une des revendications précédentes, caractérisé en ce que l'on colle une plaquette sur des éléments séparés réunis, ce qui établit leur liaison.

10. Procédé selon la revendication 1 pour la fabrication de connecteurs à enfichage pour plusieurs fibres, caractérisé en ce qu'avant d'amener la surface frontale de séparation d'un élément séparé à un état de poli brillant on fixe cet élément séparé sur une baguette profilée (65) en vue de former un élément de baguette profilée (60), que les guides de lumière s'étendent parallèlement à la direction longitudinale de la surface enveloppe de la baguette, qu'on fixe cet élément de baguette profilée (60) sur une autre baguette profilée (67), parallèlement à la direction longitudinale de la surface enveloppe de cette dernière, qu'on applique cette autre baguette profilée et une autre baguette profilée supplémentaire latérlamenet contre une arête de guidage rectiligne, sur une surface de support d'un corps de guidage de manière que la surface frontale de séparation de l'élément séparé fixé à l'autre baguette profilée soit tournée vers l'autre baguette profilée supplémentaire, sur laquelle on a placé un élément de baguette profilée, de sorte que la surface frontale de séparation de son élément séparé est disposée en vis-à-vis de l'autre surface frontale de séparation, qu'on ajuste l'élément à poser de baguette profilée sur l'élément fixé de baguette profilée de manière que les guides d'ondes de lumière des deux éléments soient essentiellement alignés, qu'on fixe l'élément ajusté de baguette profilée sur l'autre baguette profilée supplémentaire et qu'ensuite on amène à un état de poli brillant la surface frontale de séparation, non encore polie, de l'élément séparé, fixé sur deux baguettes profilées, ainsi que des baguettes profilées, ce qui fournit une pièce à enfichage.

11. Procédé selon la revendication 10, caractérisé en ce que l'on utilise comme baguettes profilées, des baguettes profilées en U (65, 67), dont l'une (65) s'adapte dans l'autre (67), l'élément séparé étant inséré dans l'évidement de la baguette profilée en U la plus petite (65).

12. Procédé selon la revendication 10 ou 11, caractérisé en ce que l'on effectue pour chaque pièce à enfichage à réaliser, l'ajustement par rapport à un prototype.

13. Procédé selon l'une des revendications 10 à 12, caractérisé en ce que l'on fixe deux pièces à enfichage, après leur réunion, sur le corps de guidage, par serrage sur la surface de support et sur l'arête de guidage à l'aide de vis.

14. Procédé selon l'une des revendications précédentes, caractérisé en ce que le réglage d'un taux de couplage défini est contrôlé par le fait qu'un guide d'ondes de lumière de l'un des deux éléments séparés qui sont réunis, est excité avec une onde lumineuse et on mesure en permanence la puissance de sortie d'un guide d'ondes de lumière ou le rapport des puissances de sortie de deux guides d'ondes de lumière de l'autre élément séparé et partant dudit guide d'ondes de lumière.

15. Procédé selon la revendication 14, caractérisé en ce qu'on utilise une source de lumière qui se rapproche autant que possible du spectre de mode stationnaire des guides d'ondes de lumière.

16. Procédé selon l'une des revendications précédentes, caractérisé en ce que le réglage de deux éléments séparés transversalement à la direction longitudinale des fibres est commandé de façon électromécanique.

17. Procédé selon la revendication 15 ou 16, caractérisé en ce que la puissance de sortie ou le rapport des puissances de sortie est contrôlée en permanence par un calculateur, pendant que les éléments séparés sont déplacés l'un par rapport à l'autre, et que l'on règle le décalage lorsqu'un rapport déterminé de puissances est atteint, et qu'on fixe les deux éléments séparés dans cette position.

18. Procédé selon la revendication 1, caractérisé en ce que pour la fabrication d'une structure de guides d'ondes de lumière parallèles, on enroule un guide d'ondes de lumière sur le pourtour d'un tambour (Z) de manière qu'il forme une bobine cylindrique (W) à une couche, qu'on sectionne cette bobine au moyen d'une coupe effectuée perpendiculairement à la direction des spires et qu'on la retire du tambour tout en conservant la disposition parallèle des guides d'ondes de lumière, qu'on la pose sur la surface du corps de support en forme de couche (1) et qu'on la fixe de telle manière que les guides d'ondes de lumière sont disposés parallèlement côte à côte et se contactent réciproquement.

19. Procédé selon la revendication 18, caractérisé en ce que la couche de spires est prélevée au moyen d'une bande adhésive (K) qui est placée transversalement sur les guides d'ondes de lumière de la couche, disposés côte à côte, de manière qu'ils y adhèrent.

20. Procédé selon la revendication 18 ou 19, caractérisé en ce que, pour réaliser la fixation des guides d'ondes de lumière sur le corps de support, on recouvre ces derniers avec un recouvrement (2) que l'on fixe sur les guides d'ondes de lumière, et qu'ensuite on fixe les guides d'ondes de lumière par introduction d'un adhésif à travers au moins une ouverture (23) prévue dans le recouvrement.

21. Procédé selon l'une des revendications 18 à 20, caractérisé en ce que l'on comprime ensemble, latéralement, les guides d'ondes de lumière à l'aide d'une butée (11) prévue sur le corps de support et d'une plaque intermédiaire déplaçable (3), jusqu'à ce qu'ils se contactent mutuellement.

# FIG1

# FIG 2

FIG 3

202" 204" 206" 208" 210" 212" 214" 216" 218" 220" 222" 224" 226" 228" 230" 232"
201" 203" 205" 207" 209" 211" 213" 215" 217" 219" 221" 223" 225" 227" 229" 231" 233"

1"
4"
21
11"
3"
1"
5"
II  I
1"

II  I
1'
22
4'
11'
3'
1'

201' 203' 205' 207' 209' 211' 213' 215' 217' 219' 221' 223' 225' 227' 229' 231' 233'
202' 204' 206' 208' 210' 212' 214' 216' 218' 220' 222' 224' 226' 228' 230' 232'

0 012 901

15

## FIG 4

219" 220" 221" 222" 223" 224"

6"

61"

50"

10"

6'

61'

10'

219' 220' 221' 222' 223' 224'

FIG 5

# FIG 6